Europäisches Patentamt

European Patent Office

Office européen des brevets

(19)

(11) Veröffentlichungsnummer: **0 499 024 A2**

(12) # EUROPÄISCHE PATENTANMELDUNG

(21) Anmeldenummer: **92100309.1**

(51) Int. Cl.⁵: **H02M 3/335**

(22) Anmeldetag: **10.01.92**

(30) Priorität: **11.02.91 DE 4104065**

(43) Veröffentlichungstag der Anmeldung:
**19.08.92 Patentblatt 92/34**

(84) Benannte Vertragsstaaten:
**AT BE CH DE FR GB IT LI LU NL**

(71) Anmelder: **BOSCH TELECOM ÖFFENTLICHE VERMITTLUNGSTECHNIK GmbH**
**Kölner Strasse 5**
**W-6236 Eschborn(DE)**

(72) Erfinder: **Rieber, Wolfram, Dipl.-Ing.**
**Höhenstrasse 76**
**W-6242 Kronberg/Ts.(DE)**

(54) **Schaltungsanordnung für Gleichspannungswandler.**

(57) 2.1 Bei einem Gleichspannungswandler soll eine Nachregelung für weitere Ausgangsspannungen erreicht werden, die nicht vom Schaltverhalten des auf der Primärseite eingesetzten elektronischen Schalters beeinflußbar sind. Dabei soll, insbesondere im Vollastfall, keine nennenswerte Verlustleistung entstehen.

2.2 Die weiteren Sekundärspannungen werden durch je einen Serienregelkreis stabilisert, der aus einem als steuerbarer Widerstand betriebenen Regeltransistor besteht. Dieser wird von einem Differenzverstärker angesteuert, der eine erste Referenzspannung mit einer von der Ausgangsspannung direkt abhängigen zweiten Referenzspannung vergleicht. Bei deren Absinken auf einen durch die erste Referenzspannung vorgegebenen Wert wird der Regeltransistor niederohmig durchgeschaltet.

2.3 Alle Ausgangsspannungen werden genau geregelt, und es erfolgt eine niederohmige Durchschaltung, wenn die abgegebene Spannung das Niveau der Verbraucherspannung erreicht.

Fig. 1

EP 0 499 024 A2

Die Erfindung betrifft eine Schaltungsanordnung für Gleichspannungswandler nach dem Oberbegriff des Patentanspruchs 1.

Es ist bekannt, Gleichspannungswandler einzusetzen, wenn die über eine Leitung angebotene Versorgungsspannung stark von der Betriebsspannung eines Endgerätes abweicht. Wenn auf einer Anschlußleitung eine relativ hohe Speisespannung angeboten wird, um mit einem niedrigen Schleifenstrom auszukommen, so ist es nicht zweckmäßig, eine für elektronische Schaltkreise notwendige sehr niedrige Betriebsspannung durch Regelschaltungen zu erzeugen, weil dann eine hohe Verlustleistung entsteht. Für diesen Anwendungsfall ist es zweckmäßiger, sog. Schaltwandler einzusetzen.

Ein Aufsatz, der sich mit dieser Problematik befaßt, ist unter dem Titel: "Fernspeisung von Endgeräten mit höherer Versorgungsleistung bei besserem Wirkungsgrad" abgedruckt in der DE-Fachzeitschrift FREQUENZ Nr. 36 (1982) 3 ab Seite 62. Dabei werden insbesondere die Wirkungsgrade von Längsreglern und Schaltreglern einander gegenübergestellt. Bei der Fernspeisung von Endgeräten soll ein hoher Wirkungsgrad erzielt werden, so daß bei der erforderlichen Leistung auf der Anschlußleitung nur ein geringer Strom fließen muß.

In vielen Endgeräten reicht jedoch eine einzige Versorgungsspannung nicht aus, so daß weitere Gleichspannungen erzeugt werden müssen. Dies kann durch einfache Längsregelung jedoch nur dann geschehen, wenn die weiteren Spannungen niedriger sind als die beispielsweise von einem Schaltwandler gelieferte Ausgangsspannung. In der DE-OS 36 40 602 ist eine Schaltungsanordnung für einen Gleichspannungs-Schaltwandler beschrieben. Dort wird angegeben, auf welche Weise es möglich ist, von einem Schaltwandler mehr als eine Ausgangsspannung zu erzeugen. Da die von einem Gleichspannungs-Schaltwandler erzeugten Ausgangsspannungen meist nicht die erforderliche Genauigkeit aufweisen, ist es bekannt, Regelschaltungen vorzusehen. So ist in dem bereits vorher zitierten Aufsatz auf Seite 66 in Bild 10 dargestellt, wie mit Hilfe eines Pulsbreite-Modulators die Ausgangsspannung eines Gleichspannungs-Schaltwandlers geregelt werden kann. Bei einem Gleichspannungs-Wandler mit mehreren Ausgangsspannungen ist ein derartiger Schaltregler nur auf eine Ausgangsspannung bezogen. Die Genauigkeit der übrigen Ausgangsspannungen ist in den meisten Anwendungsfällen nicht ausreichend, weil beispielsweise Streuinduktivität im Übertragen, ohmsche Widerstände der Wicklungen, Spannungsabfälle an den Gleichrichterdioden, unsymmetrische kapazitive Verkopplungen sowie Störimpulse beim Umschalten zu unlässigen Abweichungen fuhren können.

In der Fachzeitschrift IEEE Transactions on Power Electronics vom Oktober 1988, Nr. 4, ist ab Seite 412 ein Aufsatz abgedruckt mit dem Titel: "Eine neue hybride Stromversorgung mit Vielfachausgängen." Es ist in Zeichnungen dargestellt und beschrieben, daß bei einem Gleichspannungswandler mit mehreren Ausgängen für Sekundärspannungen nur von einer der Sekundärspannungen eine Rückwirkung auf den Primär-Schalttransistor ausgeübt wird. Die übrigen Ausgangsspannungen werden durch einen Serienregelkreis stabilisiert, so daß keine zu hohen Spannungen auftreten können. In den Serienregelkreisen ist ein Leistungs-MOS-FET angewendet, welcher den zu einer Spannungsstabilisierung notwendigen Spannungsabfall bewirkt. In der Beschreibung auf Seite 417 ist angegeben, daß der Spannungsabfall am Regeltransistor geringer sein kann, wenn eine Vorabregelung innerhalb des Gleichspannungswandlers erfolgt. Hierzu sind aber zusätzliche Reaktanzkreise erforderlich. Wenn der Spannungsabfall am Regeltransistor geringer ist, so ergibt sich dadurch ein besserer Wirkungsgrad der gesamten Anordnung, und die Verlustleistung wird geringer. Dies trifft insbesondere bei hohen Strömen zu.

Die Aufgabe der Erfindung besteht darin, eine Schaltungsanordnung für einen Gleichspannungs-Wandler anzugeben, womit eine Nachregelung für weitere Ausgangsspannungen erreicht wird, die nicht von einem Schaltregler beeinflußbar sind, wobei ohne größeren Aufwand die Verlustleistung gering gehalten wird. Diese Nachregelung soll nur bei zu hoher Spannung im Teillastbetrieb durch eine Serienregelung erfolgen. Bei zulässiger Spannung im Vollastfall soll ein Durchschaltebetrieb mit sehr geringer Verlustleistung ohne Nachregelung einsetzen.

Für die Lösung dieser Aufgabe ist eine Merkmalskombination vorgesehen, wie sie im Patentanspruch 1 angegeben ist.

Damit wird in vorteilhafter Weise erreicht, daß alle Ausgangsspannungen genau nachgeregelt werden und eine niederohmige Durchschaltung erfolgt, wenn die abgegebene Spannung das Niveau der Verbraucherspannung erreicht. Im Unteranspruch sind zusätzliche Maßnahmen angegeben, womit ein allmählicher Übergang in einen direkten Durchschaltebetrieb erfolgen kann.

Ein Ausführungsbeispiel der Erfindung wird nachfolgend anhand von Zeichnungen näher erläutert.

Es zeigt

Fig. 1    das Übersichtsschaltbild eines Gleichspannungs-Schaltwandlers mit mehreren Ausgangsspannungen.

Fig. 2    das Schaltbild für die Nachregelung von Ausgangsspannungen.

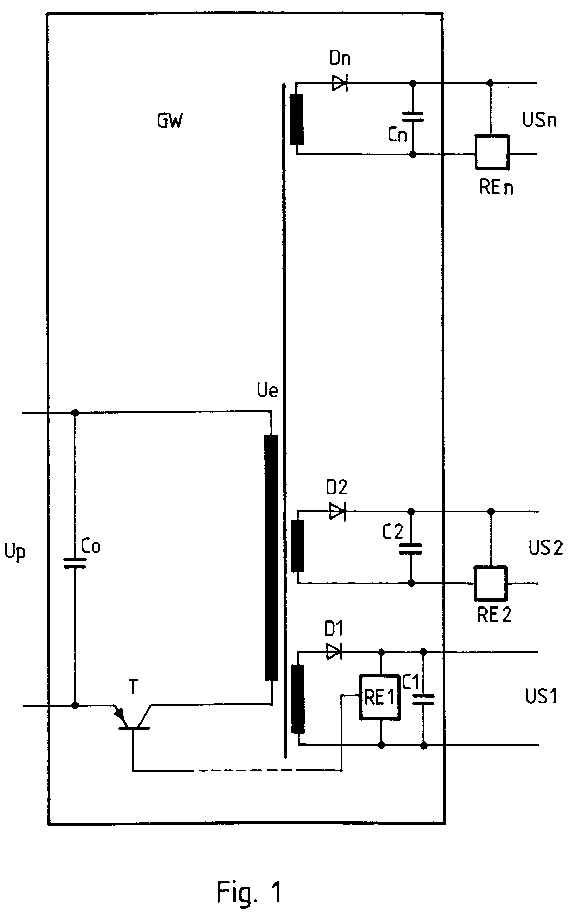

In der Fig. 1 ist dargestellt, wie dem Gleichspannungs-Wandler GW eine Primärspannung Up zugeführt wird, welche durch einen Transistor T auf die Primärwicklung eines Übertragers Ue geschaltet wird. Dies geschieht in periodischen Zeitabständen, welche von einem Taktgeber bestimmt werden. Der Übertrager Ue enthält mehrere Sekundärwicklungen, von denen verschiedene Ausgangsspannungen Us 1 bis Usn abgenommen werden können. Da die Sekundärwicklungen Wechselspannungen abgeben, sind Gleichrichterdioden D1 bis Dn vorgesehen, um eine Gleichspannung zu erzeugen. Zur Glättung dieser Gleichspannung sind Kondensatoren C1 bis Cn vorgesehen. Auf der Primärseite des Übertragers Ue ist ebenfalls ein Kondensator Co zur Glättung der Primär-Gleichspannung Up angeschaltet.

Für eine der Ausgangsspannungen, z.B. Us1, ist ein Regler RE1 vorgesehen. Dabei handelt es sich vorzugsweise um diejenige Ausgangsspannung mit dem höchsten Leistungsbedarf. Der Regler RE1 steuert in bekannter Weise die Einschaltdauer des Transistors T in Abhängigkeit von der vorliegenden Last. Dies hat zur Folge, daß dem Primärkreis nicht mehr Strom entnommen wird, als zum Aufrechterhalten der erforderlichen Ausgangsspannung Us1 notwendig ist.

Die übrigen Sekundär-Gleichspannungen Us2 bis Usn werden durch jeweils eigene Regler RE2 bis REn nachgeregelt, so daß auch dort genaue Ausgangsspannungen zur Verfügung stehen.

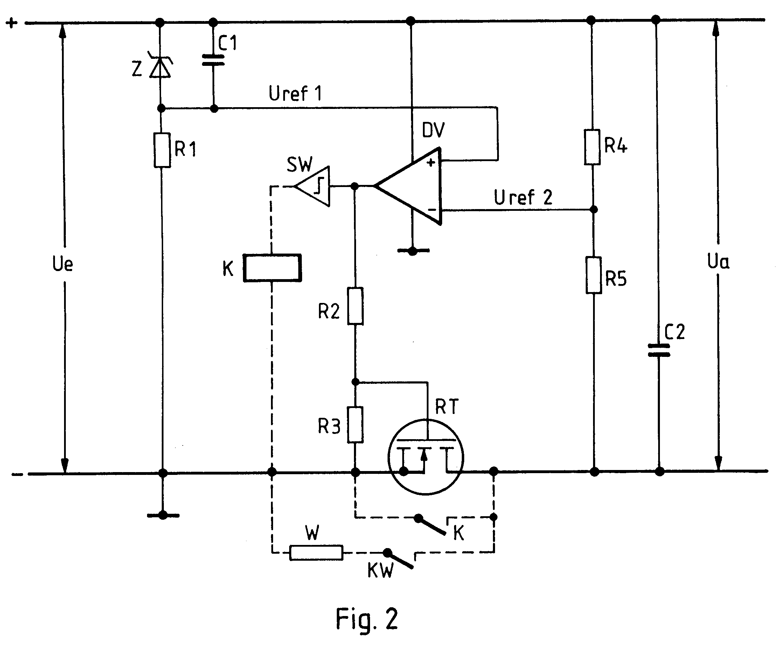

Eine Schaltungsanordnung zur Nachregelung der übrigen Ausgangsspannungen Us2 bis Usn ist in der Fig.2 angegeben. Als Regelelement ist vorzugsweise ein Feldeffekttransistor RT vorgesehen, der als regelbarer Widerstand betrieben wird. Dessen Steuerspannung wird von einem aus Widerständen R2 und R3 gebildeten Spannungsteiler abgenommen, welcher von einem Differenzverstärker DV mit Strom versorgt wird. Der Differenzverstärker DV vergleicht eine von der Eingangsspannung Ue abgeleitete Referenzspannung U ref1 laufend mit einer direkt von der Ausgangsspannung Ua abhängigen zweiten Referenzspannung U ref2. Zur Stabilisierung der fest vorgegebenen ersten Referenzspannung U ref1 ist eine Zehnerdiode Z, ein Widerstand R1 und ein Kondensator C1 vorgesehen. Die zweite Referenzspannung wird durch einen aus Widerständen R4 und R5 bestehenden Spannungsteiler gebildet.

Die erste Referenzspannung U ref1 entspricht dem Sollwert der sekundären Verbraucherspannung, also der Ausgangsspannung Ua. Wenn diese Ausgangsspannung Ua höher ist als der Sollwert, so liefert der Differenzverstärker DV nur einen geringen Strom, so daß der Regeltransistor RT relativ hochohmig ist.

Beim Absinken der Ausgangsspannung Ua auf den Sollwert liefert der Differenzverstärker DV mehr Strom, so daß der Regeltransistor RT niederohmiger wird. Dabei werden selbstverständlich auch Lastschwankungen ausgeglichen, so daß auch dann die Ausgangsspannung Ua stabil bleibt, Zusätzlich ist zur Stabilisierung ein Kondensator C2 vorgesehen.

In der Fig. 2 ist gestrichelt angedeutet, welche zusätzlichen Schaltmaßnahmen zur Verringerung der Verlustleistung beim Vollastbetrieb durchgeführt werden können. Insbesondere dann, wenn hohe Ströme fließen, steigt die Verlustleistung am Regeltransistor RT stark an. Um für diesen Betriebsfall die Verlustleistung im Strompfad noch weiter zu verringern und auch um den Regeltransistor RT zu entlasten, ist der Schaltstrecke des Regeltransistors RT ein Kontakt k parallel geschaltet. Dieser Kontakt wird durch ein Relais K betätigt, welches durch einen Schwellwertverstärker SW angesteuert wird. Dieser Schwellwertverstärker SW spricht an, wenn von dem Differenzverstärker DV mehr Strom geliefert wird, als zum niederohmigen Durchschalten des Regeltransistors RT benötigt wird. Mit dem Ansprechen des Relais K findet eine direkte Durchschaltung der Eingangsspannung Ue zur Ausgangsspannung Ua statt. Das Relais K wird dann wieder abgeschaltet, wenn die Ausgangsspannung Ua bei geringer werdender Belastung wieder ansteigt.

Es kann außerdem ein zweites Relais vorgesehen werden, welches einen Kontakt kw und damit einen Widerstand W der Schaltstrecke des Regeltransistors RT parallel schaltet. Dabei findet eine Stromteilung statt, so daß eine Lastverteilung entsteht, womit der Regeltransistor RT entlastet wird. Für dieses zweite Relais ist in nicht dargestellter Weise ein zweiter Schwellwertverstärker erforderlich, welcher früher anspricht als der Schwellwertverstärker SW zur Steuerung des Relais K. Damit ist es möglich, einen allmählichen Übergang beim Kurzschließen des Regeltransistors RT zu erreichen. Mit diesen zusätzlichen Schaltmaßnahmen wird die Entstehung von Verlustwärme besonders am Regeltransistor RT stark verringert.

Da die Steuerstromkreise für die Relais, z.B. K, hochohmig ausgelegt werden können, ist der dafür zusätzlich erforderliche Strom sehr gering, so daß keine zusätzliche Wärmeentwicklung zu erwarten ist.

## Patentansprüche

1. Schaltungsanordnung für Gleichspannungswandler mit einem periodisch angesteuerten Schalttransistor, der eine Primärspannung auf einen Transformator schaltet, an dessen Sekundärwicklungen mehrere gleichgerichtete Sekundärspannungen abnehmbar sind, wobei mindestens eine der Sekundärspannungen stabilisiert ist und die dafür vorgesehene Regelschaltung den Schalttransistor beeinflußt,

**dadurch gekennzeichnet,**
daS die weiteren Sekundärspannungen (U2 bis Un) durch je einen Serienregelkreis (RE2 bis REn) stabilisiert werden,

daß nur in einem ersten Betriebsfall bei zu hoher Ausgangsspannung (Ua) eine Spannungsstabilisierung durch einen als steuerbarer Widerstand betriebenen Regeltransistor (RT) vorgenommen wird, welcher von einem Differenzverstärker (DV) angesteuert wird, der eine erste Referenzspannung (Uref1) mit einer von der Ausgangsspannung (Ua) direkt abhängigen zweiten Referenzspannung (Uref2) vergleicht,

daß in einem zweiten Betriebsfall bei zulässiger Ausgangsspannung (Ua), also beim Absinken der zweiten Referenzspannung (Uref2) auf einen durch die erste Referenzspannung (Uref1) vorgegebenen Wert keine Nachregelung mehr stattfindet, sondern der Regeltransistor (RT) niederohmig durchgeschaltet wird, wobei der Differenzverstärker (DV) den Linearbereich verläßt und in den Durchschaltebereich übergeht,

und daß ein zusätzlicher Schwellwertschalter (SW) vorgesehen werden kann, der beim Übergang des Differenzverstärkers (DV) in den Durchschaltebetrieb anspricht und ein zusätzliches Schaltmittel, z. B. ein Relais (K), ansteuert, wodurch dann der Regeltransistor (RT) von einem Kontakt (k) überbrückt wird.

2. Schaltungsanordnung nach Anspruch 1,
**dadurch gekennzeichnet,**
daß mehrere Schwellwertschalter (SW) vorgesehen sein können, die jeweils ein Schaltmittel (kw) steuern, welches einen niederohmigen Widerstand (W) dem Regeltransistor (RT) parallel schaltet, womit ein stufenweiser Übergang in den direkten Durchschaltezustand erfolgt.

Fig. 1

Fig. 2

EP 0 499 024 A2